# EUROPÄISCHE PATENTANMELDUNG

(11) **EP 1 103 403 A2**
(43) Veröffentlichungstag der Anmeldung: **30.05.2001**
(21) Anmeldenummer: 00124190.0
(22) Anmeldetag: 08.11.2000
(51) Int. Cl.: B60J 7/20

(54) **Verstellbare Klappe in der Verkleidung eines Fahrzeugs**

(30) Priorität: 26.11.1999 DE 19956882
(71) Anmelder: CTS Fahrzeug-Dachsysteme GmbH, 21079 Hamburg (DE)
(72) Erfinder: Conradt, Holger, 71706 Markgröningen (DE); Eidmann, Carsten, 71282 Hemmingen (DE); Just, Jan, Michigan 48382 (US); Rose, Frank, 74912 Kirchhardt-Berwang (DE)
(74) Vertreter: Müller, Gottfried

(57) **Zusammenfassung**

Eine Klappe (1) in der Verkleidung eines Fahrzeugs ist mittels einer Klappenkinematik (2) zwischen einer Schließstellung, in der die Klappe (1) im Wesentlichen in der Ebene der Fahrzeugverkleidung liegt, und einer Freigabestellung verstellbar.

In einer betriebssicheren Ausführung ist im Seitenbereich der Klappe (1) eine fahrzeugfeste Kulissenbahn (3) für die passive Führung eines ersten, die Klappe (1) mit dem Fahrzeug verbindenden Führungshebels (4) vorgesehen. Im gegenüberliegenden Seitenbereich der Klappe (1) ist ein zweiter, aktiv geführter Führungshebel (5) angeordnet, welcher von einem motorisch angetriebenen Stellglied (6) beaufschlagt wird.

## Beschreibung

Die Erfindung betrifft eine verstellbare Klappe in der Verkleidung eines Fahrzeugs nach dem Oberbegriff des Anspruches 1.

Derartige Klappen werden beispielsweise bei Cabriolet-Fahrzeugen eingesetzt, um die Verstellkinematik des verstellbaren Fahrzeugdaches in Schließ- und Ablagestellung zu verdecken und bei der Überführungsbewegung zwischen Schließ- und Ablagestellung freizugeben, um die Verstellbewegung ungehindert ausführen zu können. Die Fahrzeugklappen sind in die Verkleidung des Fahrzeuges integriert und liegen in Schließ- und Freigabestellung des Fahrzeugdaches etwa in einer Ebene mit der Fahrzeugverkleidung. Die Klappen sind in der Regel schwenkbar an der Verkleidung gehalten und schwenken bei der Verstellbewegung des Fahrzeugdaches nach außen auf, wodurch die Verstellkinematik nach außen offen liegt. Die Klappen werden üblicherweise ausschließlich mechanisch betätigt, indem nach einer Auslösung der Verstellbewegung des Fahrzeugdaches die Verstellkinematik bzw. ein weiteres, dem Fahrzeugdach zuzuordnendes Bauteil, welches unterhalb der Klappe verdeckt von dieser angeordnet ist, die Klappe nach außen aufstößt. Nach Abschluss der Verstellbewegung wird die Klappe, nachdem das Verdeck seine entgültige Position eingenommen hat, über eine Feder in seine Schließstellung zurückgesetzt.

Aus Komfortgründen werden heutzutage üblicherweise motorisch angetriebene Fahrzeugverdecke eingesetzt, welche mittels eines Elektromotors zwischen Schließ- und Ablagestellung zu verstellen sind. Zwar können die Klappen auch bei motorisch angetriebenen Fahrzeugverdecken in der vorbeschriebenen Weise rein mechanisch betätigt werden, man ist jedoch aus Gründen einer größeren Vielseitigkeit und breiteren Verwendbarkeit bestrebt, auch die Klappen mit einem selbständigen motorischen Antrieb zu versehen, da dadurch eine kinematische Kopplung zwischen der Verdeckkinematik bzw. einem damit zusammenhängenden Bauteil und der Klappe entfallen kann. Bei motorischen Antrieben für die Klappen muss jedoch wegen dem beschränkten Platzangebot auf eine kleine Bauweise geachtet werden, ohne jedoch die Zuverlässigkeit und die Funktionsfähigkeit der Klappenbewegung einzuschränken.

Aus der Druckschrift DE 195 18 071 A1 ist eine Betätigungseinrichtung für ein Verdeck und einen Verdeckkastendeckel eines Kraftfahrzeugs bekannt, wobei der Verdeckkastendeckel von einer Verstelleinrichtung zu beaufschlagen ist, die auf jeder Längsseite des Verdeckkastendeckels einen Führungsarm aufweist, so dass der Verdeckkastendeckel an zwei Seiten motorisch beaufschlagt wird. Bei beidseitig beaufschlagten Deckeln ist zwar die Gefahr des Verkantens geringer als bei lediglich einseitig angetriebenen Deckeln, da die Antriebskräfte sich über die Länge bzw. die Breite der beaufschlagten Klappe bzw. des Deckels gleichmäßig verteilen. Andererseits erfordert ein beidseitiger motorischer Antrieb einen beträchtlich höheren konstruktiven Aufwand und beansprucht verhältnismäßig viel Bauraum.

Ein beidseitiger motorischer Antrieb eines Verdeckkastendeckels geht auch aus der Druckschrift DE 196 50 402 A1 hervor.

Zum weiteren Stand der Technik wird noch auf die Druckschriften DE 36 23 468 C2 und DE 42 32 147 C1 verwiesen.

Der Erfindung liegt das Problem zu Grunde, eine verstellbare Klappe in der Verkleidung eines Fahrzeugs zu schaffen, die bei kleiner Bauweise eine hohe Standzeit aufweist.

Dieses Problem wird erfindungsgemäß mit den Merkmalen des Anspruches 1 gelöst.

Die neuartige Klappe in der Verkleidung des Fahrzeugs weist einen motorischen Antrieb auf, welcher jedoch nur im Bereich einer seitlichen Führung im Seitenbereich der Klappe diese beaufschlagt. Um ein Verklemmen der Klappe auf Grund der außermittigen Kraftbeaufschlagung zu vermeiden und sicher zu stellen, dass die Klappe eine die Verstellbewegung über einen langen Betriebszeitraum ohne Probleme ausführen kann, ist auf der dem motorischen Antrieb gegenüberliegenden Seite der Klappe eine fahrzeugfeste Kulissenbahn vorgesehen, in die ein mit der Klappe verbundener Führungshebel greift, der in der Kulissenbahn passiv geführt wird. Damit wird die Klappe in einem ihrer Seitenbereiche aktiv und im gegenüberliegenden Seitenbereich passiv geführt. Die doppelte Führung in den Seitenbereichen der Klappe verhindert ein Verkanten, so dass die Funktionstüchtigkeit über einen langen Betriebszeitraum sicher gestellt ist. Ein weiterer Vorteil dieser Ausführung liegt darin, dass zusätzliche Möglichkeiten im Hinblick auf die Einbaulage der Klappe im Fahrzeug gegeben sind, weil der motorische Antrieb prinzipiell ohne dass Beeinträchtigung des Bewegungsverhaltens an jeder der beiden Klappenseiten angreifen kann. Dadurch ist es in einer bevorzugten Ausführung möglich, zwei Klappen im Bereich gegenüberliegender Fahrzeugseiten, welche bezüglich einer Fahrzeuglängsmittelebene symmetrisch aufgebaut sind, über einen gemeinsamen motorischen Antrieb zu verstellen.

Weiterhin ist ein die beiden Führungshebel an gegenüberliegenden Seitenbereichen der Klappe in Schließstellung verbindender Sperrhebel vorgesehen, welcher sich am aktiv geführten Führungshebel abstützt und die Bewegung des passiv geführten Führungshebels blockiert. Dadurch wird erreicht, dass in Schließstellung die Klappe gleichmäßig gegen eine unbeabsichtigte, durch äußere Krafteinwirkung hervorgerufene Verstellbewegung in Richtung ihrer Freigabestellung gesichert wird. Im Bereich des aktiv geführten Führungshebels erfolgt eine Arretierung durch das motorisch angetriebene Stellglied, wohingegen im gegenüberliegenden Seitenbereich der passiv geführte Führungshebel in Schließstellung eine Abstützung über den Sperrhebel erfährt, der in Schließstellung beide Führungshebel miteinander verbindet.

In einer vorteilhaften Weiterbildung weist der Sperrhebel im Bereich seiner beiden Stirnseiten jeweils ein Sperrelement auf, wobei das Sperrelement auf der aktiv angetriebenen Seite der Klappe oberhalb des motorisch angetriebenen Stellglieds aufliegt und auf der passiv geführten Seite den dort vorhandenen Führungshebel von unten abstützt.

Es ist vorzugsweise eine zweite fahrzeugfeste Kulissenbahn vorgesehen, welche mit Abstand zur erste Kulissenbahn - in Verstellrichtung der Klappe gesehen - angeordnet ist. Ein an der Klappe befestigter Kulissenbolzen ist in der zweiten Kulissenbahn geführt und stützt dadurch den dem Angriffspunkt der beiden Führungshebel gegenüberliegenden Seitenabschnitt der Klappe ab, so dass die Klappe in Verstellrichtung sowohl eine obere als auch eine untere Abstützung bzw. Führung erfährt. Die zweite Kulissenbahn weist vorteilhaft geschwungenen Verlauf auf, der an die jeweiligen baulichen Gegebenheiten angepasst werden kann. Insbesondere im Bereich der Endabschnitte der zweiten Kulissenbahn sind Raststellungen für den eingreifenden Kulissenbolzen ausgebildet, um sicher zu stellen, dass die Klappe sowohl in ihrer Schließstellung als auch in ihrer Freigabestellung verrastbar ist und die jeweilige Endposition auch ohne Verklemmung oder Abstützung durch andere Bauteile beibehält.

Um eine Rückstellung der Klappe von Freigabestellung zurück in Schließstellung zu unterstützen, ist vorteilhaft ein schwenkbar am Fahrzeug befestigter Ausrückhebel vorgesehen, der in Freigabestellung der Klappe den Kulissenbolzen unterstützend aufnimmt. Der Ausrückhebel ist in Richtung der Schließstellung der Klappen federbelastet, so dass bereits bei einer geringfügigen Bewegung, ausgelöst durch das motorisch angetriebene Stellglied, in Richtung der Schließstellung der Kulissenbolzen in der Kulissenbahn in Richtung Schließstellung beaufschlagt wird; der Kulissenbolzen erfährt hierbei einen Anfangsimpuls.

Weitere Vorteile und zweckmäßige Ausführungen sind den weiteren Ansprüchen, der Figurenbeschreibung und den Zeichnungen zu entnehmen. Es zeigen:
- Fig. 1: eine erfindungsgemäße Klappe in Explosionsdarstellung,
- Fig. 2: eine zu der in Fig. 1 dargestellten Klappe spiegelsymmetrisch aufgebaute Klappe in Zusammenbauposition.

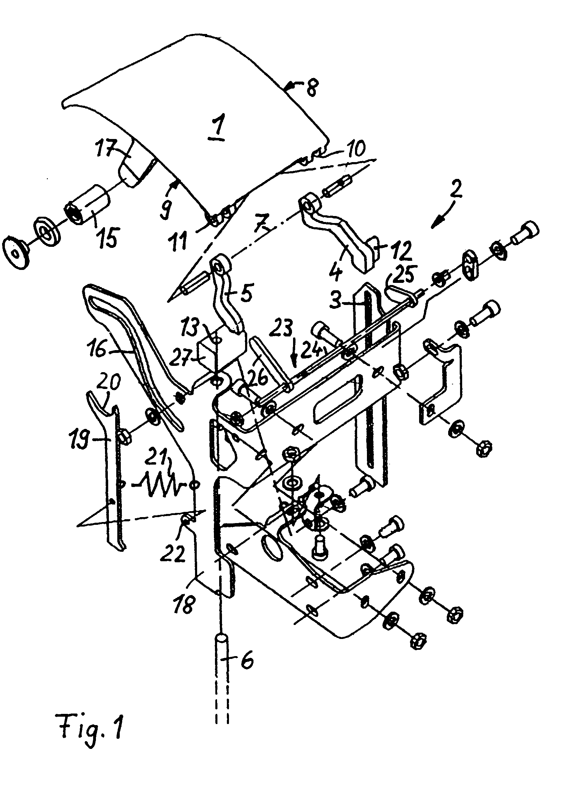

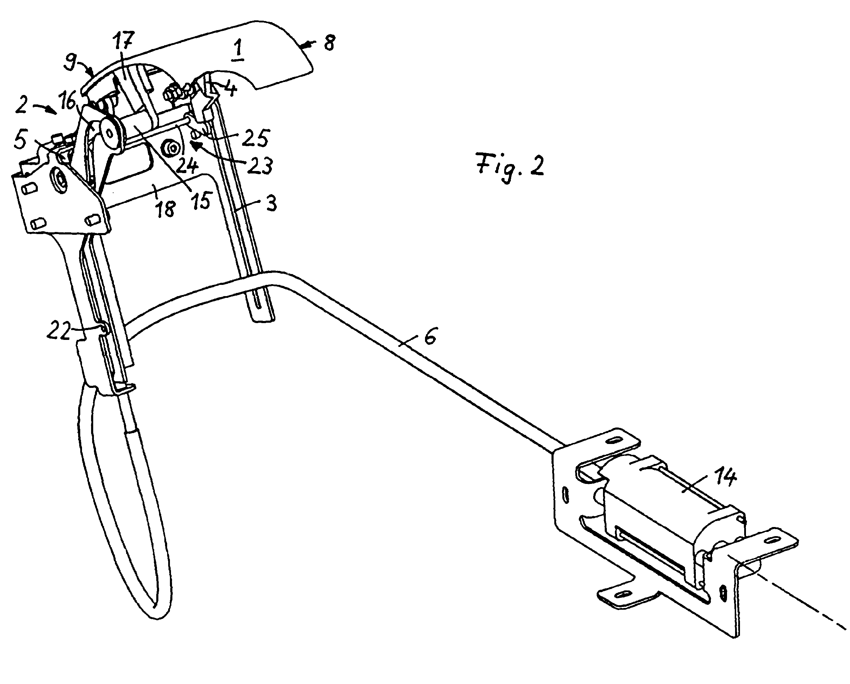

Bei den in Fig. 1 und 2 dargestellten Klappen sind gleiche Bauteile mit gleichen Bezugszeichen versehen.

Bei der dargestellten Klappe 1 handelt es sich um eine Verstellklappe, welche in der Verkleidung eines Fahrzeuges angeordnet ist, insbesondere um eine Abdeckklappe zum Abdecken der Verdeckkinematik eines verstellbaren Fahrzeugverdecks, das zwischen Verdeck- und Ablagestellung verstellt werden kann, wobei bevorzugt zwei Abdeckklappen im gegenüberliegenden Seitenbereich des Fahrzeuges vorgesehen sind, beispielsweise im Bereich eines Überrollbügels des Fahrzeugs. Die Klappe 1 kann zwischen der in Fig. 1 und Fig. 2 dargestellten Schließstellung, in welcher die Klappe in die umgebende Fahrzeugverkleidung integriert ist und im wesentlichen in der Ebene der umliegenden Verkleidung liegt, und einer Freigabestellung verstellt werden, in welcher die Klappe eine Öffnung der Fahrzeugverkleidung freigibt, insbesondere, um eine darunter liegende Verstellkinematik eines Fahrzeugverdecks freizugeben. In Freigabestellung wird die Klappe vorteilhaft unter die umgebende Fahrzeugverkleidung versenkt und liegt etwa parallel zur Fahrzeugverkleidung.

Die Klappenkinematik 2, über die die Überführungsbewegung zwischen Schließstellung und Freigabestellung durchzuführen ist, umfasst als wesentliche Bauelemente eine im Ausführungsbeispiel näherungsweise vertikal laufende Kulissenbahn 3, in die ein erster, passiver Führungshebel 4 eingreift, einen zweiten, aktiven Führungshebel 5 sowie ein motorisch angetriebenes Stellglied 6. Die Kulissenbahn 3 und der passive erste Führungshebel 4 sind im Bereich einer Seite 8 der Fahrzeugklappe angeordnet, der aktive zweite Führungshebel 5 sowie das motorisch angetriebene Stellglied 6 sind im Bereich der gegenüberliegenden Seite 9 der Klappe 1 angeordnet. Die beiden Führungshebel 4 und 5 weisen klappenseitig eine gemeinsame Drehachse 7 auf, welche vertikal zur Kulissenbahn 3 verläuft. Klappenseitig sind beide Führungshebel 4, 5 an den Seiten 8 bzw. 9 der Klappe 1 in Lagern 10, 11 aufgenommen.

Der passive Führungshebel 4 weist auf der dem klappenseitigen Lager 10 gegenüberliegenden Seite einen seitlichen Vorsprung 12 auf, welcher in die Kulissenbahn 3 einragt und für eine sichere Führung in der Kulissenbahn sorgt. Der gegenüber liegende, aktive Führungshebel 5 kann ebenfalls in einer Kulissenbahn geführt sein; der Führungshebel 5 wird jedoch über das motorische Stellglied 6 aktiv angetrieben. Die beiden Führungshebel 4 und 5 führen eine zeitgleiche, gleichartige Bewegung in der gleichen Richtung durch. Der aktive Führungshebel 5 weist eine Aufnahme 13 in einem Vorsprung 27 auf, in die das motorische Stellglied 6 zur Übertragung der Bewegung des Stellglieds 6 einragt. Das motorische Stellglied 6 ist im Ausführungsbeispiel als flexible Welle ausgebildet, welche von dem in Fig. 2 dargestellten zentralen Antriebsmotor 14 angetrieben wird, über den zwei gegenüber liegende Klappen 1 am Fahrzeug zeitgleich betätigt werden können.

Zusätzlich zu der an der unteren Stirnseite der Klappe 1 angreifenden Führung über die Führungshebel 4 und 5 erfährt die Klappe 1 eine weitere Führung im Bereich der Seite 9, an der auch das motorische Stellglied 6 angreift. Die zusätzliche Führung wird durch einen Kulissenbolzen 15 gebildet, der in eine zweite, fahrzeugfeste Kulissenbahn 16 eingreift. Der Kulissenbolzen 15 ist klappenseitig an einer Lasche 17 im Bereich der Seite 9 der Klappe 1 gehalten. Die fahrzeugfeste zweite Kulissenbahn 16, die der ersten Kulissenbahn 3 gegenüberliegt, weist einen geschwungenen Verlauf mit einem näherungsweise horizontalen oberen Abschnitt, einem steil nach unten verlaufenden mittleren Abschnitt und einem flacher verlaufenden unteren Endabschnitt auf, wobei der Übergang zwischen dem oberen und dem unteren Endabschnitt einen Wendepunkt durchläuft. Liegt der Kulissenbolzen 15 an der Stirnseite des oberen Endabschnittes, befindet sich die Klappe 1 in Schließstellung. Liegt dagegen der Führungsbolzen 15 an der Stirnseite des unteren Endabschnittes an, befindet sich die Klappe 1 in Freigabestellung.

Etwa parallel zur Kulissenbahn 16 ist an dem die Kulissenbahn 16 aufnehmenden Bauteil, einem Winkelblech 18, ein Ausrückhebel 19 schwenkbar gehalten, der um eine Schwenkachse verstellt werden kann, die parallel zur Drehachse 7 der beiden Führungshebel 4 und 5 an der Klappe 1 verläuft, wobei der Lagerpunkt des Ausrückhebels 19 mit Abstand zur Stirnseite des unteren Endabschnittes der Kulissenbahn 16 angeordnet ist. Der Ausrückhebel 19 weist auf der der Kulissenbahn 16 zugewandten Seite eine teilkreisförmige Aufnahmeöffnung 20 auf, in die der Bolzen in seiner unteren Endstellung in der Kulissenbahn 16 einrückt. Weiterhin ist eine Druckfeder 21 im Abschnitt zwischen dem Lager 22, über das der Ausrückhebel 19 am Winkelblech 18 gehalten ist, und der Aufnahmeöffnung 20 vorgesehen, wobei der Ausrückhebel 19 über die Druckfeder 21 mit dem Winkelblech 18 kraftverbunden ist. Die Druckfeder 21 drückt den Ausrückhebel 19 vom Winkelblech 18 weg.

Im Bereich der beiden Führungshebel 4 und 5 ist auf der der Klappe 1 abgewandten Seite ein fahrzeugfester, jedoch drehbar gelagerter Sperrhebel 23 angeordnet, der eine die Distanz zwischen beiden Führungshebeln 4, 5 überbrückende Übertragungsstange 24 sowie zwei laschenförmige Sperrelemente 25, 26 im Bereich der Stangen-Stirnseiten an der Übertragungstange 24 umfasst. Die Übertragungsstange 24 verläuft parallel zur Drehachse 7 der Führungshebel 4, 5 an der Klappe 1. Die beiden laschenförmigen Sperrelemente 25 und 26 erstrecken sich radial zur Übertragungsstange 24 und stehen zumindest in Schließstellung der Klappe 1 mit den beiden Führungshebeln 4, 5 in Kontakt, wobei das dem aktiven Führungshebel 5 zugewandte Sperrelement 26 auf dem die Aufnahme 13 für das Stellglied 6 enthaltenden Vorsprung 27 aufliegt, das gegenüber liegende Sperrelement 25 dagegen unterhalb des Vorsprungs 12 des passiven Führungselementes 4 angeordnet ist. Die beiden Sperrelemente 25, 26 erstrecken sich in Bezug auf die Längsachse der Übertragungsstange 24 in einem unterschiedlichen Winkel, beide Sperrelemente sind drehfest mit der Übertragungsstange verbunden.

Bei der Überführungsbewegung von Schließstellung in Freigabestellung wird das motorische Stellglied 6 über den gemeinsamen Antriebsmotor 14 axial aus seiner oberen Position nach unten bewegt; hierbei wird auch der aktive Führungshebel 5, der fest mit dem Stellglied 6 verbunden ist, axial nach unten verstellt.

Die beiden Führungshebel 4, 5 weisen zweckmäßig im Bereich ihrer der Fahrzeugklappe 1 abgewandten Stirnseite eine weitere Drehachse auf, die parallel zur klappenseitigen Drehachse 7 verläuft. Bei der Verstellbewegung zwischen Schließstellung und Freigabestellung verschwenken dabei die Führungshebel 4 und 5 um beide Drehachsen. Die vom Stellglied 6 ausgelöste aktive Stellbewegung wird über den Führungshebel 5 und die Klappe 1 auf den passiven Führungshebel 4 übertragen, der eine entsprechende Bewegung wie der aktive Führungshebel 5 ausführt und in der Kulissenbahn 3 nach unten geführt wird.

Zu Beginn der Überführungsbewegung von oberer Schließstellung in die untere Freigabestellung verschwenken die beide Sperrelemente 25, 26 am Sperrhebel 23 als Folge der drehbaren Lagerung der Übertragungsstange 24 nach unten und weichen unter der Bewegung der Führungshebel 4 und 5 aus; die Sperrelemente 25 und 26 stellen insoweit kein Hindernis für die Bewegung der Führungshebel 4 und 5 dar.

Der Kulissenbolzen 15, welcher in Verstellrichtung gesehen mit Abstand zur Lagerung der Führungshebel 4 und 5 an der Klappe 1 angeordnet ist, wird bei der Verstellbewegung von Schließstellung in Freigabestellung aus seiner stirnseitigen Position im oberen Endabschnitt der zweiten Kulissenbahn 16 über den mittleren Abschnitt bis in den unteren Endabschnitt überführt. Bei Annäherung an den unteren Endabschnitt der Kulissenbahn 16 greift der Kulissenbolzen 15 in die Aufnahmeöffnung 20 am Ausrückhebel 19 ein, wobei im weiteren Verlauf der Bewegung bis zum Erreichen der Stirnseite des unteren Endabschnittes die Druckfeder 21 zusammengedrückt wird und hierdurch potentielle Energie aufnimmt. In der unteren Freigabestellung wird die Klappe 1 einschließlich der Klappenkinematik 2 durch die Arretierung über das motorisch betriebene Stellglied festgehalten.

Bei der entgegengesetzten Bewegung von Freigabestellung in Schließstellung wird das Stellglied 6 nach oben bewegt, zugleich wird der Ausrückhebel 19 durch die Kraft der Druckfeder 21 nach außen verschwenkt, wodurch der in der Aufnahmeöffnung 20 aufgenommene Kulissenbolzen 15 einen Anfangsimpuls erfährt, der den Beginn der Bewegung aus der unteren Endposition, die eine Rastposition ist, unterstützt. Im weiteren Verlauf rückt der Kulissenbolzen 15 aus der Aufnahmeöffnung 20 wieder aus.

Sobald der aktive Führungshebel 5 in den Bereich seiner oberen Endstellung gelangt, liegt das dem Führungshebel 5 zugeordnete Sperrelement 26 des Sperrhebels 23 auf dem Vorsprung 27 des Führungshebels 5 auf, zugleich wird über die Übertragungsstange 24 das gegenüber liegende Sperrelement von unten an den Vorsprung 12 des passiven Führungshebels 4 gedrückt, so dass dieser in seiner oberen Endstellung sicher gehalten ist.

Durch die beschriebene Verstellkinematik kann die Klappe 1 in ihrer Öffnungs- bzw. Freigabestellung unter die umliegende Verkleidung abgesenkt werden, wobei in dieser Position die Klappe 1 im Wesentlichen parallel zur Verkleidung angeordnet ist.

## Patentansprüche

1. Verstellbare Klappe in der Verkleidung eines Fahrzeugs, insbesondere Abdeckklappe zum Abdecken der Verdeckkinematik eines zwischen Verdeckstellung und Ablagestellung verstellbaren Fahrzeugverdecks, wobei die Klappe (1) mittels einer Klappenkinematik (2) zwischen einer Schließstellung, in der die Klappe (1) in der Ebene der Fahrzeugverkleidung liegt, und einer Freigabestellung verstellbar ist,
**dadurch gekennzeichnet,**
dass im Seitenbereich der Klappe (1) eine fahrzeugfeste Kulissenbahn (3) für die passive Führung eines ersten, die Klappe (1) mit dem Fahrzeug verbindenden Führungshebels (4) vorgesehen ist und dass im gegenüberliegenden Seitenbereich der Klappe ein zweiter, aktiv geführter Führungshebel (5) angeordnet ist, welcher von einem motorisch angetriebenen Stellglied (6) beaufschlagt wird, wobei ein Sperrhebel (23) zwischen den beiden Führungshebeln (4 und 5) in Schließstellung der Klappe (1) an dem aktiv geführten Führungshebel (5) abgestützt ist und die Bewegung des passiv geführten Führungshebels (4) blockiert.

2. Klappe nach Anspruch 1,
**dadurch gekennzeichnet,**
dass der Sperrhebel (23) im Bereich seiner Stirnseiten jeweils ein Sperrelement (25 bzw. 26) aufweist, wobei in Schließstellung der Klappe das Sperrelement (26) auf der Seite des motorisch angetriebenen Stellglieds (6) auf diesem aufliegt und das Sperrelement (25) auf der gegenüberliegenden Seite den passiv geführten Führungshebel (4) abstützt.

3. Klappe nach Anspruch 1 oder 2,
**dadurch gekennzeichnet,**
dass die Führungshebel (4 und 5) gelenkig an der Klappe (1) gelagert sind.

4. Klappe nach Anspruch 3,
**dadurch gekennzeichnet,**
dass die Führungshebel (4 und 5) eine gemeinsame Drehachse (7) an der Klappe (1) aufweisen.

5. Klappe nach einem der Ansprüche 1 bis 4,
**dadurch gekennzeichnet,**
dass die Führungshebel (4 und 5) in der Kulissenbahn (3) bzw. am motorischen Stellglied (6) gelenkig gelagert sind.

6. Klappe nach einem der Ansprüche 1 bis 5,
**dadurch gekennzeichnet,**
dass eine zweite fahrzeugfeste Kulissenbahn (3) vorgesehen ist, die in Verstellrichtung der Klappe (1) mit Abstand zur ersten Kulissenbahn (3) angeordnet ist, wobei ein an der Klappe (1) befestigter Kulissenbolzen (15) in der zweiten Kulissenbahn (16) geführt ist.

7. Klappe nach Anspruch 6,
**dadurch gekennzeichnet,**
dass die zweite Kulissenbahn (16) gegenüberliegend zur ersten Kulissenbahn (3) angeordnet ist.

8. Klappe nach Anspruch 6 oder 7,
**dadurch gekennzeichnet,**
dass die zweite Kulissenbahn (16) einen geschwungenen Verlauf mit einem Wendepunkt einnimmt.

9. Klappe nach einem der Ansprüche 6 bis 8,
**dadurch gekennzeichnet,**
dass die Endabschnitte der zweiten Kulissenbahn (16) Raststellungen für den Kulissenbolzen (15) bilden.

10. Klappe nach einem der Ansprüche 6 bis 9,
**dadurch gekennzeichnet,**
dass ein verschwenkbar am Fahrzeug befestigter Ausrückhebel (19) vorgesehen ist, der in Freigabestellung der Klappe (1) den Kulissenbolzen (15) unterstützend aufnimmt, wobei der Ausrückhebel (19) in Richtung der Schließstellung der Klappe (1) federbelastet ist.

11. Klappe nach einem der Ansprüche 1 bis 10,
**dadurch gekennzeichnet,**
dass die Klappe (1) in Freigabestellung näherungsweise parallel zur Verkleidung angeordnet ist und insbesondere unterhalb der Verkleidung liegt.

12. Klappe nach einem der Ansprüche 1 bis 11,
**dadurch gekennzeichnet,**
dass zwei Klappen (1) vorgesehen sind, insbesondere jeweils eine an einer Fahrzeugseite, und dass beide Klappen (1) einen gemeinsamen motorischen Antrieb aufweisen.
